(19) Europäisches Patentamt / European Patent Office / Office européen des brevets

(11) **EP 1 363 108 B1**

(12) **EUROPÄISCHE PATENTSCHRIFT**

(45) Veröffentlichungstag und Bekanntmachung des Hinweises auf die Patenterteilung:
**02.04.2014 Patentblatt 2014/14**

(51) Int Cl.:
*G01F 1/58* *(2006.01)*       *G01F 25/00* *(2006.01)*

(21) Anmeldenummer: **02027489.0**

(22) Anmeldetag: **11.12.2002**

(54) **Verfahren zur Bestimmung der Unsicherheit eines magnetisch-induktiven Durchflussmessers**

Method to determine the uncertainty of a magnetic inductive flow meter

Méthode pour déterminer l'incertitude d'un débitmètre magnéto-inductif

(84) Benannte Vertragsstaaten:
**AT BE BG CH CY CZ DE DK EE ES FI FR GB GR IE IT LI LU MC NL PT SE SI SK TR**

(30) Priorität: **14.05.2002 DE 10221510**
**29.11.2002 DE 10256103**

(43) Veröffentlichungstag der Anmeldung:
**19.11.2003 Patentblatt 2003/47**

(73) Patentinhaber: **KROHNE MESSTECHNIK GMBH & CO. KG**
**47058 Duisburg (DE)**

(72) Erfinder: **Brockhaus, Helmut, Dr.**
**46535 Dinslaken (DE)**

(74) Vertreter: **Gesthuysen Patent- und Rechtsanwälte**
**Patentanwälte**
**Huyssenallee 100**
**45128 Essen (DE)**

(56) Entgegenhaltungen:
**DE-A- 19 938 160**

• **PATENT ABSTRACTS OF JAPAN Bd. 2000, Nr. 04, 31. August 2000 (2000-08-31) & JP 2000 028408 A (FUJI ELECTRIC CO LTD), 28. Januar 2000 (2000-01-28)**

EP 1 363 108 B1

**Beschreibung**

Die Erfindung betrifft ein Verfahren zur Bestimmung der Unsicherheit eines mit einem mit einer Feldfrequenz geschalteten magnetischen Gleichfeld arbeitenden magnetisch-induktiven Durchflußmeßverfahrens, wobei in jeder Halbperiode des geschalteten magnetischen Gleichfelds durch Abtastung eines Meßsignals jeweils wenigstens ein Meßwert bestimmt wird.

Die vorliegende Erfindung ist insbesondere zur Anwendung bei einem magnetisch-induktiven Durchflußmeßverfahren geeignet, darauf jedoch nicht beschränkt. Magnetisch-induktive Durchflußmeßverfahren sind schon seit längerer Zeit gut bekannt und werden vielfältig in unterschiedlichen Einsatzgebieten verwendet. Das grundlegende Prinzip eines magnetisch-induktiven Durchflußmeßgeräts für strömende Medien geht dabei bereits auf Farraday zurück, der im Jahre 1832 vorgeschlagen hat, das Prinzip der elektrodynamischen Induktion zur Strömungsgeschwindigkeitsmessung anzuwenden, Nach dem Farradayschen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Farradaysche Induktionsgesetz wird bei einem magnetisch-induktiven Durchflußmeßgerät dadurch ausgenutzt, daß ein Magnet, im allgemeinen bestehend aus zwei Magnetpolen mit je einer Magnetspule, ein Magnetfeld senkrecht zur Strömungsrichtung in dem Meßrohr erzeugt. Innerhalb dieses Magnetfelds liefert jedes sich durch das Magnetfeld bewegende und eine gewisse Anzahl von Ladungsträger aufweisende Volumenelement des strömenden Mediums mit der in diesem Volumenelement entstehenden Feldstärke einen Beitrag zu einer über Meßelektroden abgreifbaren Meßspannung, Die Meßelektroden werden bei den bekannten magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist schließlich die Proportionalität der Meßspannung und der über den Querschnitt des Meßrohrs ermittelten Strömungsgeschwindigkeit des Mediums, d.h. zwischen Meßspannung und Volumenstrom.

Im eigentlichen Durchflußmeßbetrieb wird bei dem magnetisch-induktiven Durchflußmeßverfahren im allgemeinen das Magnetfeld zeitlich alternierend umgeschaltet. Aus dem Stand der Technik sind dazu unterschiedliche Vorgehensweisen bekannt. Eine magnetisch-induktive Durchflußmessung ist z.B. mit einem Wechselfeld möglich, wobei typischerweise die Magnetspulen des Magneten direkt vom Stromnetz mit einer sinusförmigen 50-Hz-Wechselspannung gespeist werden. Die aufgrund der Strömung erzeugte Meßspannung zwischen den Meßelektroden wird dabei jedoch durch transformatorische Störspannungen sowie Netzstörspannungen überlagert.

Heutzutage wird daher bei magnetisch-induktiven Durchflußmessungen im allgemeinen mit einem geschalteten Gleichfeld gearbeitet. Ein solches geschaltetes Gleichfeld erhält man, indem den Magnetspulen des Magneten ein Strom mit zeitlich rechteckförmigem Verlauf zugeführt wird, der seine Polarität zeitlich alternierend ändert. Möglich ist jedoch auch eine magnetisch-induktive Durchflußmessung mit Hilfe eines pulsierenden Gleichfeldes, das dadurch erhalten wird, daß die Magnetspulen des Magneten nur periodenweise mit einem zeitlich rechteckförmigen, immer die gleiche Polarität aufweisenden Strom versorgt werden. Ein Verfahren, bei dem der Feldstrom periodisch umgepolt wird, ist jedoch bevorzugt, da durch die Änderung der Polarität des Magnetfelds Störgrößen, wie elektrochemische Störgrößen, unterdrückt werden können.

Bei der Verwendung eines umpolbaren geschalteten Gleichfelds muß nach dem Umschalten abgewartet werden, bis sich das Magnetfeld stabilisiert hat. Danach wird das Meßsignal, nämlich die Meßspannung, typischerweise gegeben durch die Differenzspannung zwischen den Elektroden, im allgemeinen aufintegriert, bis der Feldstrom wieder in die umgekehrte Polarität umgeschaltet wird. Das Abwarten bis das Magnetfeld eingeschwungen ist, ist wichtig, um eine gute Meßgenauigkeit zu erzielen.

Eine bei einem magnetisch-induktiven Durchflußmeßverfahren, jedoch auch bei anderen Meßverfahren, bei denen in jeder Halbperiode der Meßfrequenz durch Abtastung eines Meßsignals jeweils wenigstens ein Meßwert bestimmt wird, sehr interessante Größe ist die Unsicherheit des Meßverfahrens. Diese kann nämlich zu verschiedenen Diagnosezwecken verwendet werden. Die Unsicherheit wird im wesentlichen bestimmt durch die Unruhe der Meßwerte. Die Unruhe der Meßwerte ist ein Maß für deren Schwankungsbreite und entspricht im allgemeinen der Standardabweichung der Meßwerte.

Das Problem bei einer magnetisch-induktiven Durchflußmessung besteht nun darin, daß der Durchfluß selbst typischerweise gerade nicht konstant ist, nämlich gemessen werden soll. Konkret läßt sich also bei der Bestimmung der Standardabweichung der Meßwerte bei der Meßfrequenz nicht unterscheiden, ob die Ursache der Standardabweichung in der Unruhe der Meßwerte, also originär in der mit der Meßfrequenz erfaßten Elektrodendifferenzspannung liegt, die als Störung zu betrachten wäre, oder ihren Ursprung in einer ebenfalls mit der Meßfrequenz erfaßten Änderung des Durchflusses hat, der ja gerade gemessen werden soll.

Zur Prüfung der Verläßlichkeit eines mit einem magnetisch-induktiven Durchflußmeßgerät ermittelten Durchflußwertes ist es aus der EP 0 521 448 A2 bekannt, die Absolutbeträge der an den beiden Meßelektroden abgegriffenen Meßspannungen in einer jeweiligen Halbperiode der Meßfrequenz zu vergleichen, um bei einer Abweichung der Absolutbeträge voneinander ein Alarmsignal zu erzeugen. Ferner ist es aus der DE 34 23 076 C2 bekannt, Störwechsel- und Störgleichspannungsanteile bei einem magnetisch-induktiven Durchflußmeßverfahren dadurch zu erfassen, daß die Meßspannung mit einem Vielfachen der Erregunsfrequenz des Magnetfelds abgetastet wird.

Um bei einem magnetisch-induktiven Durchflußmeßverfahren ein dem Meßsignal überlagertes Störsignal zu bestimmen und das Meßsignal entsprechend korrigieren zu können, ist es aus der DE 199 38 160 A1 bekannt, die Erregung der das Magnetfeld erzeugenden Feldspulen lückend durchzuführen, so daß es ermöglicht ist, daß die Meßzeiträume zusätzlich zu den beiden Halbperioden des Magnetfelds jeweils einen Bereich vor der ersten Halbperiode des Magnetfelds und einen Bereich nach der letzten Halbperiode des Magnetfelds umfassen. Die vor bzw. nach der jeweiligen Halbperiode des Magetfelds gemessenen Zusatzsignale dienen dann der zuvor genannten Korrektur, nämlich der vorzugsweise vollständigen Eleminierung des dem Meßsignal überlagerten Störsignals.

Schließlich ist es aus der JP 2000-028408 bekannt, zur Rauschunterdrückung bei einem Durchflußsignal den Mittelwert solcher Durchflußsignale zu verwenden, die mittels einer Abtastung erhalten worden sind, deren Frequenz der doppelten Anregungsfrequenz des Magnetfelds entspricht. Dabei wird ausgenutzt, daß zu solchen Zeiten ermittelte Werte, zu denen kein Magnetfeld anliegt, einen Durchflußwert von Null liefern sollten.

Die zuvor genannten, aus dem Stand der Technik bekannten Verfahren stellen jedoch keine Möglichkeit zur Verfügung, die Unruhe der Meßwerte, also z. B. deren Standardabweichung, zu bestimmen, und zwar bei der Meßfrequenz.

Damit ist es die Aufgabe der Erfindung, ein solches Verfahren zur Bestimmung der Unsicherheit anzugeben, mit dem die Unruhe der Meßwerte auf einfache Weise auch bei der Meßfrequenz bestimmbar ist.

Das erfindungsgemäße Verfahren, mit dem die zuvor hergeleitete und aufgezeigte Aufgabe gelöst ist, ist ausgehend von dem eingangs beschriebenen Verfahren dadurch gekennzeichnet, dass in jeder Halbperiode der Feldfrequenz durch Abtastung des Messsignals jeweils eine Mehrzahl von zeitlich aufeinanderfolgenden abgetasteten Messwerten bestimmt wird, dass zur Ermittlung der Unruhe die abgetasteten Messwerte einer Frequenztransformation unterworfen werden, die durch Multiplikation der abgetasteten Messwerte mit einer vorbestimmten Rechteckfunktion erfolgt, dass die Unruhe bei der doppelten Feldfrequenz und die Unruhe bei der halben Feldfrequenz mit den jeweiligen frequenztransformierten abgetasteten Messwerten bestimmt werden und dass die Unruhe der abgetasteten Messwerte bei der Feldfrequenz durch Interpolation zwischen der Unruhe bei der doppelten Feldfrequenz und der Unruhe bei der halben Feldfrequenz ermittelt wird.

Dem erfindungsgemäßen Verfahren liegt die bei Versuchen ohne Felderregung, also ohne Durchflußmessung, gewonnene Erkenntnis zugrunde, daß die Kurve des Frequenzspektrums der Elektrodendifferenzspannung im wesentlichen stetig ist. Insofern ist das erfindungsgemäße Verfahren auch für alle anderen mit einer Meßfrequenz arbeitenden Meßverfahren anwendbar, die die gleiche Voraussetzung, nämlich Stetigkeit des Frequenzspektrums, erfüllen.

In diesem Zusammenhang ist auch anzumerken, daß bei der Mehrzahl von zeitlich aufeinanderfolgenden Meßwerten die Meßwerte zwar unmittelbar aufeinanderfolgen können, jedoch nicht unmittelbar aufeinanderfolgen müssen, also auch einen zeitlichen Abstand voneinander aufweisen können.

Dabei wird die Unruhe bei der Meßfrequenz durch, vorzugsweise lineare, Interpolation zwischen der Unruhe bei der doppelten Meßfrequenz und der Unruhe bei der halben Meßfrequenz ermittelt. Dies erfordert, daß pro Halbperiode wenigstens zwei zeitlich aufeinanderfolgende Meßwerte bestimmt werden, die vorzugsweise durch Integration des Meßsignals über gleiche Zeitdauern erhalten werden. Mit der Erfindung wird bei der Verwendung des Interpolationsverfahrens eine hohe Genauigkeit bei einfacher Durchführbarkeit des Verfahrens erzielt.

Zur Ermittlung der Unruhe können verschiedene Werte herangezogen werden. Gemäß einer bevorzugten Weiterbildung der Erfindung ist jedoch vorgesehen, daß zur Ermittlung der Unruhe die Standardabweichung verwendet wird, insbesondere, daß die Unruhe der Standardabweichung entspricht. Dies ist, wie eingangs schon angesprochen, eine aus dem Stand der Technik schon im Zusammenhang mit anderen Verfahren bewährte Vorgehensweise.

Die Frequenztransformation erfolgt durch Multiplikation der Meßwerte mit einer vorbestimmten Rechteckfunktion. Diese Rechteckfunktion weist vorzugsweise in ihrem anzuwendenden Bereich nur die Werte + 1 und - 1 auf, so daß die vorbestimmte Rechteckfunktion insbesondere durch die Anwendung der Signum-Funktion auf eine die Phasenlage der Meßwerte berücksichtigende Funktion darstellbar ist. Dabei ist die Signum-Funktion, bezeichnet mit sign(), eine solche Funktion, die angewandt auf einen Wert entweder den Wert + 1 und - 1 liefert, nämlich abhängig davon, ob der Wert, auf den die Signum-Funktion angewandt wird, positiv oder negativ ist.

Vorzugsweise erfolgt nach der Frequenztransformation der Meßwerte eine Tiefpaßfilterung der frequenztransformierten Meßwerte. Die Tiefpaßfilterung erfolgt dabei vorzugsweise mittels eines kurzen FIR-Filters (Finite-Impulse-Response-Filter).

Die ermittelte Unruhe bei der Meßfrequenz ist nun auf verschiedene Weisen verwendbar. Insbesondere ist gemäß einer bevorzugten Weiterbildung der Erfindung vorgesehen, daß die ermittelte Unruhe bei der Meßfrequenz als Diagnosewert über einen Signalausgang, über eine Anzeige oder/und über eine digitale Kommunikationsschnittstelle ausgegeben wird. Dabei kann gemäß einer bevorzugten Weiterbildung der Erfindung vorgesehen sein, daß auf die ermittelte Unruhe bei der Meßfrequenz eine Schwellwertfunktion angewandt wird, so daß bei Überschreiten einer vorbestimmten Warnschwelle eine Warnmeldung ausgegeben wird. Anstatt der Ausgabe einer Warnmeldung ist auch das Schalten eines Gerätes möglich. Außerdem kann gemäß einer bevorzugten Weiterbildung der Erfindung vorgesehen sein, daß die Unruhe bei der Maßfrequenz als Parameter für einen adaptiven Sperrfilter verwendet wird. Insbesondere kann nämlich die Breite des Sperrfilters, z. B. angewandt auf die Meßwerte, in Abhängigkeit von der Unruhe bei der Meßfrequenz gesteuert werden.

Schließlich ist es gemäß einer bevorzugten Weiterbildung der Erfindung vorgesehen, daß die Differenz oder/und das Verhältnis der Unruhe bei einer über der Meßfrequenz liegenden Frequenz und einer unter der Meßfrequenz liegenden Frequenz bestimmt und als Diagnosewert über einen Signalausgang, über eine Anzeige oder über eine digitale Kommunikationsschnittstelle ausgegeben werden. Damit kann auf den Frequenzverlauf der Unruhe geschlossen werden, wobei Änderungen der Differenz bzw. des Verhältnisses auf eine Prozeßänderung hindeuten können. Auch in diesem Fall ist es gemäß einer bevorzugten Weiterbildung der Erfindung vorgesehen, daß auf die Differenz bzw. das Verhältnis der Unruhe bei einer der über der Meßfrequenz liegenden Frequenz und einer unter der Meßfrequenz liegenden Frequenz eine Schwellwertfunktion angewandt wird, so daß bei Überschreiten einer vorbestimmten Warnschwelle eine Warnmeldung ausgegeben wird, die wiederum auch in einem Schalten eines Geräts bestehen kann.

Im einzelnen gibt es eine Vielzahl von Möglichkeiten, das erfindungsgemäße Verfahren auszugestalten und weiterzubilden. Dazu wird auch auf die den Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt

Fig. 1 schematisch den Aufbau eines magnetisch-induktiven Durchflußmeßgeräts zur Durchführung des erfindungsgemäßen Verfahrens

Fig. 2 den Ablauf des Verfahrens zur Bestimmung der Unsicherheit gemäß einem bevorzugten Ausführungsbeispiel der Erfindung und

Fig. 3 schematisch die Meßwerte sowie die auf die Meßwerte anzuwendende Rechteckfunktionen zur Durchführung einer Phasentransformation bzw. einer Frequenztransformation gemäß bevorzugter Ausführungsbeispiele der Erfindung.

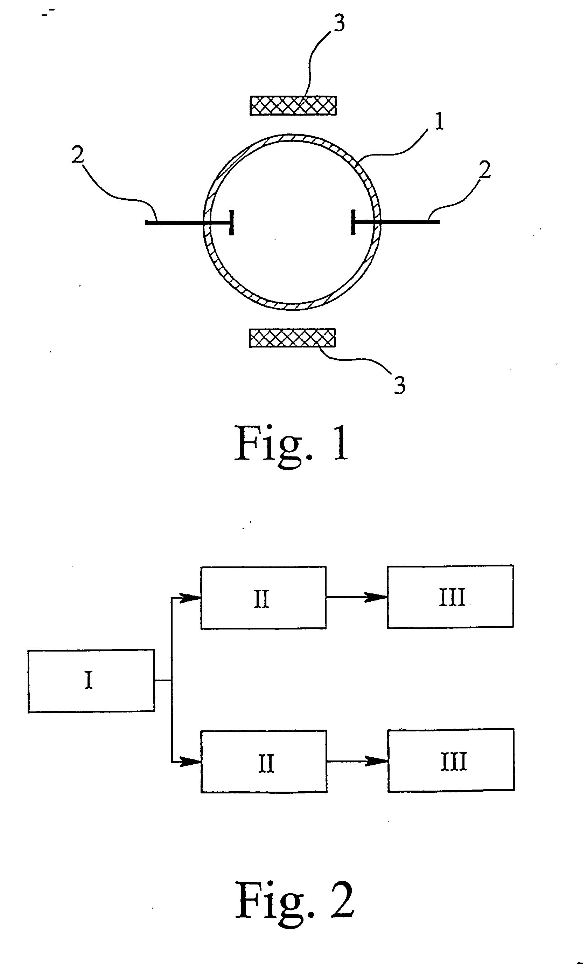

Aus Fig. 1 ist schematisch ein magnetisch-induktives Durchflußmeßgerät zur Durchführung des erfindungsgemäßen Verfahrens ersichtlich. Das magnetisch-induktive Durchflußmeßgerät weist ein Meßrohr 1 auf, durch das ein nicht weiter dargestelltes Medium strömt. Ferner sind zwei Meßelektroden 2 vorgesehen, mit denen eine in dem durch das Meßrohr 1 strömenden Medium induzierte Meßspannung erfaßbar ist. Zur Erzeugung eines senkrecht zur Meßrohrachse und senkrecht zur Verbindungslinie der Meßelektroden 2 verlaufenden Magnetfelds dienen zwei Magnetspulen 3.

Fig. 2 zeigt nun schematisch die Signalverarbeitungskette. In Schritt I erfolgt zunächst eine Abtastung der Elektrodendifferenzsignale. Auf die Werte der Elektrodendifferenzsignale wird danach in Schritt II eine Phasentransformation oder eine Frequenztransformation durch Multiplikation mit einer Rechteckfunktion angewendet. In Schritt III werden die phasentransformierten bzw. frequenztransformierten Werte schließlich einer Tiefpaßfilterung unterzogen. Im Ergebnis ergibt sich somit, bezogen auf die Meßfrequenz der Elektrodendifferenzspannung, ein Bandpaß, wobei die Meßfrequenz vorliegend gegeben ist durch die Feldfrequenz des Feldstroms, mit dem die Magnetspulen 3 des aus Fig. 1 ersichtlichen magnetisch-induktiven Durchflußmeßgeräts gespeist wird. Die Schritte II und III können dabei auch in einem Rechenschritt zusammengefaßt sein und sind hier nur aus Gründen der Übersichtlichkeit getrennt voneinander dargestellt.

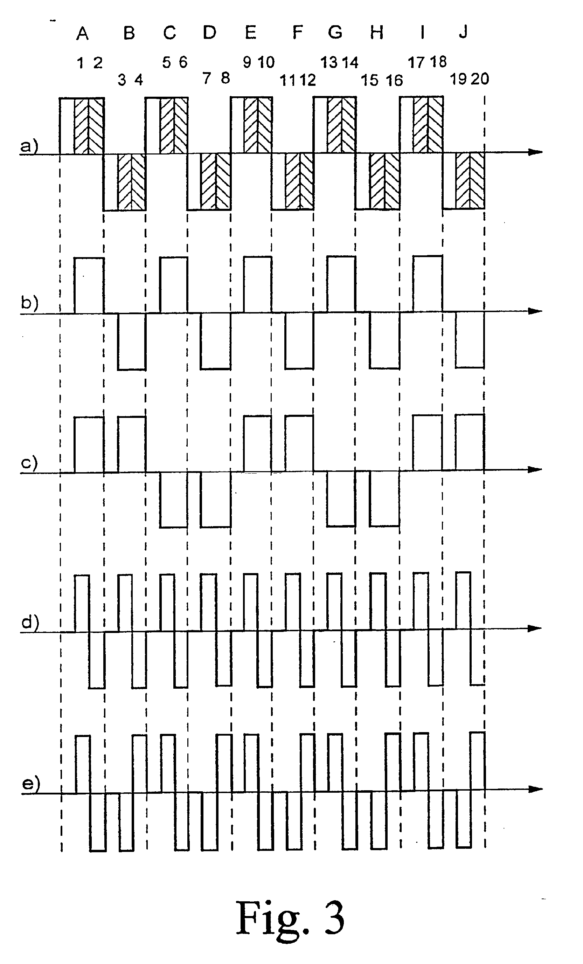

Die Abtastung des Meßsignals erfolgt für die bevorzugten Ausführungsbeispiele der Erfindung, wie in Fig. 3 a dargestellt: In einem ersten Bereich einer jeden Halbperiode erfolgt keine Abtastung des Meßsignals; hier wird das Einschwingen des Meßsignals nach dem Umschalten des Magnetfelds abgewartet. Darauffolgend sind zwei zeitlich gleich lange und unmittelbar aufeinander folgende Abtastbereiche vorgesehen. Diese sind in der Halbperiode A mit 1 und 2, in der Halbperiode B mit 3 und 4 usw. bezeichnet. Gemäß der bevorzugten Ausführungsbeispiele der Erfindung sind die durch die Abtastung des Meßsignals zur Verfügung stehenden Meßwerte jeweils Mittelwerte über ein Zeitintervall, nämlich die Zeitintervalle 1, 2, 3 usw. Es sei nur am Rande bemerkt, daß aufgrund der schematischen Darstellung des Meßsignals Fig. 3 a die Form des Meßsignals stark vereinfacht zeigt, insbesondere nämlich nicht den Einschwingvorgang zeigt.

In den Figuren 3b bis 3e sind nun Rechteckfunktion gemäß bevorzugter Ausführungsbeispiele der Erfindung dargestellt, die durch Multiplikation mit der in Fig. 3 a dargestellten Meßwertkurve Werte liefern, die zur Ermittlung des Durchflusses, zur Ermittlung der Unruhe bei einer Frequenz, die kleiner als die Meßfrequenz ist, zur Ermittlung der Unruhe bei einer Frequenz, die größer als die Meßfrequenz ist, bzw. zur Ermittlung der Unruhe bei der Meßfrequenz, jedoch phasenverschoben dazu, dienen.

Für die eigentliche magnetisch-induktive Durchflußmessung, also zur Bestimmung des eigentlichen Durchflusses, erfolgt eine Multiplikation der Meßwerte $U_i$ ($i$ = 1, 2, 3, ...) wie folgt:

$$W_i = U_i \, \text{sign}(\sin(\frac{2\pi i}{4} - \frac{\pi}{4})).$$

Aufgrund des Faktors $i/4$ in der Formel zur Berechnung des Durchflusses ist die Datenrate für die Abtastwerte um den Faktor 4 größer als die Meßfrequenz. Einsetzen der Werte 1, 2, 3 liefert eine Rechteckfunktion, wie in Fig. 3 b dargestellt, nämlich mit den Werten + 1 in den Bereichen 1 und 2 der Halbperiode A sowie - 1 in den Bereichen 3 und 4 der Halbperiode B usw. Multiplikation der in Fig. 3b dargestellten Rechteckfunktion mit dem in Fig. 3 a gezeigten Meßsignal liefert dann Werte $W_i$ für den Durchfluß. Diese Werte $W_i$ werden dann einer Tiefpaßfilterung unterzogen (Schritt III), wie weiter unten im einzelnen beschrieben.

Um Werte zur Berechnung der Unruhe bei einer Frequenz zu erhalten, die kleiner als die Meßfrequenz ist, nämlich die halbe Meßfrequenz beträgt, wird folgende, Multiplikation vorgenommen:

$$W_i = U_i \, \text{sign}(\sin(\frac{2\pi i}{8} - \frac{\pi}{8})).$$

Der entsprechende Verlauf der Rechteckkurve ist in Fig. 3c gezeigt.

Um Werte zur Bestimmung der Unruhe bei einer Frequenz zu erhalten, die größer als die Meßfrequenz ist, nämlich gerade die doppelte Meßfrequenz beträgt, wird folgende Multiplikation durchgeführt:

$$W_i = U_i \, \text{sign}(\sin(\frac{2\pi i}{2} - \frac{\pi}{2})).$$

Der entsprechende Verlauf der Rechteckkurve ist in Fig. 3d gezeigt.

Um Werte zur Bestimmung der Unruhe bei einer der Meßfrequenz entsprechenden Frequenz zu erhalten, jedoch 90° ($\pi$/2) phasenverschoben dazu, wird folgende Multiplikation vorgenommen:

$$W_i = U_i \, \text{sign}(\sin(\frac{2\pi i}{4} + \frac{\pi}{4})).$$

Der entsprechende Verlauf der Rechteckkurve ist in Fig. 3e gezeigt.

Wie zuvor schon ausgeführt, müssen die Werte $W_i$ nun einer Tiefpaßfilterung unterzogen werden. Bei den hier beschriebenen bevorzugten Ausführungsbeispielen der Erfindung wird dazu ein kurzes FIR-Filter verwendet, zur Filterung über zwei Halbwellen nämlich folgende Rechenvorschrift angewendet, wobei die Werte $X_i$ die tiepaßgefilterten Werte darstellen:

$$X_i = \frac{1}{4}(W_{i-3} + W_{i-2} + W_{i-1} + W_i).$$

Zur Filterung über drei Halbwellen wird folgende Rechenvorschrift angewendet:

$$X_1 = \frac{1}{8}(W_{i-5} + W_{i-4} + 2W_{i-3} + 2W_{i-2} + W_{i-1} + W_i).$$

Mit den dadurch ermittelten Werten $X_i$ kann dann, z. B. durch Ermittlung der Standardabweichung, die Unruhe bei der Meßfrequenz berechnet werden. Die Unruhe ist damit direkt gegeben durch die Standardabweichung. Dies kann direkt erfolgen, nämlich in dem Fall, daß die Unruhe bei einer der Meßfrequenz entsprechenden Frequenz, jedoch 90° phasenverschoben dazu berechnet worden ist, oder durch vorzugsweise lineare Interpolation zwischen den Unruhen, die bei Frequenzen ermittelt worden sind, die einerseits größer und andererseits kleiner als die Meßfrequenz sind.

Kombiniert man die Verfahrensschritte II und III in einem Schritt, so sind zur Ermittlung tiefpaßgefilterter Werte konkret z. B. folgende Rechenvorschriften möglich, wobei die tiefgestellten Indizes B, C, D, ... die jeweilige Halbperiode darstellen.

Berechnung eines tiefpaßgefilterten Durchflusses M bei der Meßfrequenz:

$$M_B = \frac{1}{4}(U_1 + U_2 - U_3 - U_4)$$

$$M_C = \frac{1}{4}(-U_3 - U_4 + U_5 + U_6)$$

$$M_D = \frac{1}{4}(U_5 + U_6 - U_7 - U_8)$$

$$M_E = \frac{1}{4}(-U_7 - U_8 + U_9 + U_{10})$$

Berechnung von tiefpaßgefilterten Werten L zur Ermittlung der Unruhe bei der halben Meßfrequenz:

$$L_D = \frac{1}{8}(U_1 + U_2 + U_3 + U_4 - U_5 - U_6 - U_7 - U_8)$$

$$L_E = \frac{1}{8}(U_3 + U_4 + U_5 + U_6 - U_7 - U_8 - U_9 - U_{10})$$

$$L_F = \frac{1}{8}(U_5 + U_6 + U_7 + U_8 - U_9 - U_{10} - U_{11} - U_{12})$$

$$L_G = \frac{1}{8}(U_7 + U_8 + U_9 + U_{10} - U_{11} - U_{12} - U_{13} - U_{14})$$

Berechnung von tiefpaßgefilterten Werten H zur Ermittlung der Unruhe bei einer der Meßfrequenz entsprechenden Frequenz, jedoch 90° phasenverschoben dazu:

$$H_{\mathrm{B}} = \frac{1}{4}(U_1 - U_2 + U_3 - U_4)$$

$$H_{\mathrm{C}} = \frac{1}{4}(U_3 - U_4 + U_5 - U_6)$$

$$H_{\mathrm{D}} = \frac{1}{4} = (U_5 - U_6 + U_7 - U_8)$$

$$H_{\mathrm{E}} = \frac{1}{4}(U_7 - U_8 + U_9 - U_{10})$$

Die Werte $U_i$ ($i$ = 1, 2, 3, ...) sind dabei wiederum durch die Mittelwerte in den Bereichen $i$ der Halbperioden A, B, C, ... gegeben, nämlich durch die in diesem Bereich aufintegrierte Elektrodendifferenzsignale.

Die zuvor genannten Rechenvorschriften liefern Werte L bzw. H, auf der Grundlage derer die Unruhe ermittelt wird und zwar durch Ermittlung deren Standardabweichung. Diese Rechenvorschriften sind nur einfache Beispiele. Es sind auch aufwendigere Berechnungsvorschriften denkbar, z. B. für den Durchfluß M:

$$M_{\mathrm{c}} = \frac{1}{8}(U_1 + U_2 - 2(U_3 + U_4) + U_5 + U_6).$$

Dies läßt sich dann entsprechend auf die weiteren Durchflußwerte für die folgenden Halbperioden D, E, F, ... übertragen.

**Patentansprüche**

1.  Verfahren zur Bestimmung der Unsicherheit eines mit einem mit einer Feldfrequenz geschalteten magnetischen Gleichfeld arbeitenden magnetisch-induktiven Durchflussmessverfahrens, wobei in jeder Halbperiode des geschalteten magnetischen Gleichfelds durch Abtastung eines Messsignals jeweils wenigstens ein Messwert bestimmt wird, **dadurch gekennzeichnet,**
    dass in jeder Halbperiode der Feldfrequenz durch Abtastung des Messsignals jeweils eine Mehrzahl von zeitlich aufeinanderfolgenden abgetasteten Messwerten bestimmt wird,
    dass zur Ermittlung der Unruhe die abgetasteten Messwerte einer Frequenztransformation unterworfen werden, die durch Multiplikation der abgetasteten Messwerte mit einer vorbestimmten Rechteckfunktion erfolgt,
    dass die Unruhe bei der doppelten Feldfrequenz und die Unruhe bei der halben Feldfrequenz mit den jeweiligen frequenztransformierten abgetasteten Messwerten bestimmt werden
    und
    dass die Unruhe der abgetasteten Messwerte bei der Feldfrequenz durch Interpolation zwischen der Unruhe bei der doppelten Feldfrequenz und der Unruhe bei der halben Feldfrequenz ermittelt wird,

2.  Verfahren nach Anspruch 1, **dadurch gekennzeichnet, dass** die Unruhe die Standardabweichung ist,

3.  Verfahren nach Anspruch 1 oder 2, **dadurch gekennzeichnet, dass** die frequenztransformierten abgetasteten Messwerte einer Tiefpassfilterung unterworfen werden.

4.  Verfahren nach Anspruch 3, **dadurch gekennzeichnet, dass** zur Tiefpassfilterung ein FIR-Filter verwendet wird.

**5.** Verfahren nach einem der Ansprüche 1 bis 4, **dadurch gekennzeichnet, dass** auf die ermittelte Unruhe bei der Feldfrequenz eine Schwellwertfunktion angewandt wird, so dass bei Überschreiten einer vorbestimmten Warnschwvelle eine Warnmeldung ausgegeben wird.

**6.** Verfahren nach einem der Ansprüche 1 bis 5, **dadurch gekennzeichnet, dass** die ermittelte Unruhe bei der Feldfrequenz als Parameter für einen adaptiven Sperrfilter verwendet wird.

**Claims**

**1.** A method for determining the uncertainty factor of a magnetoinductive flow measuring procedure employing a magnetic constant-current field switched at a field frequency, wherein a measuring signal is sampled for determining at least one measured value in each oscillatory half-cycle of the switched constant-current field,
**characterized in**
**that** several measured values sampled in temporal succession are determined in each half-cycle of the field frequency by sampling the measuring signal,
**that** in order to determine the deviation, the sampled measured values are subjected to a frequency transformation, which occurs by multiplying the sampled measured values with a pre-defined rectangular function,
**that** the deviation at double the field frequency and the deviation at half the field frequency are determined with the respective frequency-transformed, sampled measured value and
**that** the deviation of the sampled measured values at the field frequency are determined using interpolation between the deviation at double the field frequency and the deviation at half the field frequency.

**2.** The method according to claim 1, **characterized in that** the deviation is the standard deviation.

**3.** The method according to claim 1 or 2, **characterized in that** the phasetransformed or frequency-transformed measured values are subjected to a low-pass filtering function.

**4.** The method according to claim 3, **characterized in that** a FIR filter is used for the low-pass filtering.

**5.** The method according to any one of claims 1 to 3, **characterized in that** a threshold function is applied to the deviation determined at the field frequency, whereby an alarm message is triggered in the event the predefined alarm threshold is exceeded.

**6.** The method according to any one of claims 1 to 5, **characterized in that** the deviation at the field frequency is used as a parameter for an adaptive rejection filter.

**Revendications**

**1.** Procédé pour définir l'incertitude d'un procédé de mesure de débit magnéto-inductif fonctionnant avec un champ magnétique continu commuté avec une fréquence de champ, au moins une valeur mesurée étant à chaque fois définie dans chaque demi-période du champ magnétique continu commuté par échantillonnage d'un signal de mesure,
**caractérisé en ce**
**que** dans chaque demi-période de la fréquence de champ, une pluralité de valeurs mesurées échantillonnées successivement dans le temps est à chaque fois définie par échantillonnage du signal de mesure,
**que** pour déterminer l'instabilité, les valeurs mesurées échantillonnées sont soumises à une transformation de fréquence qui est effectuée en multipliant les valeurs mesurées échantillonnées par une fonction rectangulaire prédéfinie,
**que** l'instabilité à la fréquence de champ doublée et l'instabilité à la moitié de la fréquence de champ sont définies avec les valeurs mesurées échantillonnées respectives transformées en fréquence et
**que** l'instabilité des valeurs mesurées échantillonnées à la fréquence de champ est déterminée par interpolation entre l'instabilité à la fréquence de champ doublée et l'instabilité à la moitié de la fréquence de champ.

**2.** Procédé selon la revendication 1, **caractérisé en ce que** l'instabilité est l'écart type.

**3.** Procédé selon la revendication 1 ou 2, **caractérisé en ce que** les valeurs mesurées transformées en fréquence sont soumises à un filtrage passe-bas.

4. Procédé selon la revendication 3, **caractérisé en ce qu'**un filtre FIR est utilisé pour le filtrage passe-bas.

5. Procédé selon l'une des revendications 1 à 4, **caractérisé en ce qu'**une fonction de valeur de seuil est appliquée à l'instabilité déterminée à la fréquence de champ, de sorte qu'un message d'alerte est délivré en cas de franchissement vers le haut d'un seuil d'alerte prédéfini.

6. Procédé selon l'une des revendications 1 à 5, **caractérisé en ce que** l'instabilité déterminée à la fréquence de champ est utilisée comme paramètre pour un filtre de blocage adaptatif.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0521448 A2
- DE 3423076 C2
- DE 19938160 A1
- JP 2000028408 A